# EUROPÄISCHE PATENTSCHRIFT

(11) **EP 0 760 352 B1**
(45) Veröffentlichungstag und Bekanntmachung des Hinweises auf die Patenterteilung: **24.02.1999**
(21) Anmeldenummer: 95113682.9
(22) Anmeldetag: 31.08.1995
(51) Int. Cl.: C04B 20/10, C04B 18/16, B01J 2/30

(54) **Trockener Gips-/Gipskalkputzmörtel auf der Basis von hydrophobiertem Gasbetongranulat**
Dry gypsum of lime-gypsum plastering mortars based on hydrophobised gas concrete granules
Mortiers d'enduits secs au plâtre ou au plâtre-chaux à base de granules de béton-gaz rendus hydrophobes

(43) Veröffentlichungstag der Anmeldung: 05.03.1997
(73) Patentinhaber: Rigips GmbH, D-37619 Bodenwerder (DE)
(72) Erfinder: Balau, Johannes, D-36208 Wildeck-Obersuhl (DE); Enenkel, Wolfgang, OT Kirchbrak, D-37619 Bodenwerder (DE); Hellmuth, Erich, D-37619 Hehlen (DE); Wagner, Ottmar, D-34326 Morschen 1 (DE)
(74) Vertreter: Cohausz & Florack

(56) Entgegenhaltungen:
- DE-A- 1 811 033
- DE-A- 2 524 147
- DE-A- 4 107 929
- DE-C- 230 527
- GB-A- 1 115 761
- US-A- 1 351 087
- CHEMICAL ABSTRACTS, vol. 108, no. 22, 30.Mai 1988 Columbus, Ohio, US; abstract no. 191682e, H. YAMADA ET AL. Seite 316; & JP-A-06 308 247 (ID.)
- DATABASE WPI Week 8351 Derwent Publications Ltd., London, GB; AN 83-847844 & JP-A-58 194 769 (AGENCY OF IND SCI TECH)
- CHEMICAL ABSTRACTS, vol. 109, no. 10, 5.September 1988 Columbus, Ohio, US; abstract no. 78693s, G. BOGATYREV ET AL. Seite 340; & STROIT. MATER., Nr. 4, 1988 Seiten 19-20,

## Beschreibung

Bei der Herstellung von Gasbeton fallen große Mengen Besäumabfälle an. Unter Gasbeton ist eine Betonsorte zu verstehen, bei dessen Herstellung Wasserstoffgas entwickelnde Blähmittel eingesetzt wurden, so daß beim Anrühren und Durchmischen der Ausgangsstoffe mit Wasser viele feine Gasbläschen entstehen.

Versuche der Wiederverwertung dieser Besäumabfälle in Form von Gasbetongranulaten als Zuschlagsstoff in Gips-/Gipskalkputzmörteln führten nach Auftragen auf Wand und Mauerwerk zur Rißbildung. Da bei der Fertigung von Gasbeton jedoch größere Mengen Produktionsabfall anfallen und ein sinnvolles Einsatzgebiet dafür wünschenswert ist, bestand die Aufgabe, Gasbetongranulate in einer Form bereitzustellen, daß sie insbesondere in Gips-/Gipskalkputzmörteln ohne die genannten Nachteile einsetzbar sind.

Gelöst wird diese Aufgabe durch eine trockene Putzmischung, die 2 bis 40 Gew. % hydrophobiertes Gasbetongranulat einer Körnung bis zu 1,6 mm, 3 bis 40 Gew.% Perlite, Kalksteinmehl und/oder Kalksteingries und 40 bis 95 Gew.% der Bindemittel Gips und/oder Kalk enthält.

Es war überraschend, daß die erfindungsgemäße Putzmischung nach Anmachen mit Wasser zu Putzmörteln führt, die nach Aufbringen auf Wände keine Rißbildungen mehr aufweisen und sich darüber hinaus mit modernen Mauerwerksmaterialien gut vertragen. Durch das erfindungsgemäße Putzgemisch lassen sich Besäumabfälle aus der Gasbetonfertigung wiederverwenden, der Einsatz der Gasbetongranulate führt zu einer verbesserten Ergiebigkeit, da sich in der Putzmörtelmischung eine verringerte Rohdichte einstellt.

Besonders günstig zu bewerten ist ferner, daß mit wachsendem Gasbetongranulatanteil die Wasserdampfdiffusionswiderstandszahl und die diffusionsäquivalente Luftschichtdicke geringere Werte annehmen. Bei Zugabemengen von etwa 40 Gew.% Gasbetongranulat werden Wärmeleitfähigkeiten von 0,15 bis 0,18 W/mK gemessen, die nach DIN 18550/Teil 1 für Wärmedämmputze gefordert werden.

Gegenstand der Erfindung ist ferner ein hydrophobiertes Gasbetongranulat als Zuschlag für Baustoffe. Die Hydrophobierung mit geeigneten Hydrophobierungsmitteln erfolgt vor dem Vermischen mit anderen Zuschlagsstoffen und Bindemittel. Geeignete Hydrophobierungsmittel sind Gemische wasserlöslicher Salze einer höheren Fettsäure und einer Metallseife einer höheren Fettsäure. Als erfindungsgemäß einzusetzende höhere Fettsäuren sind insbesondere solche mit mehr als 12 Kohlenstoffatomen anzusehen, sie können gesättigt oder ungesättigt vorliegen. Als wasserlösliche Salze einer höheren Fettsäure werden vorzugsweise deren Natrium- oder Kaliumsalze eingesetzt. Als wasserunlösliche Metallseifen kommen vorzugsweise die Calcium und Zinksalze höherer Fettsäuren in Betracht.

Als besonders vorteilhaft hat es sich erwiesen zur Hydrophobierung des Gasbetongranulats das Massenverhältnis wasserlösliches Salz einer höheren Fettsäure zur Metallseife einer höheren Fettsäure auf etwa 1:4 bis 6 einzustellen. So können beispielsweise, bezogen auf die Gasbetongranulatmenge, 0,1 % Natriumoleat und 0,5 % Calciumstearat oder Zinkstearat eingesetzt werden.

Bei Verwendung eines Gasbetongranulats mit einer Körnung von bis zu 1,6 mm hat es sich als vorteilhaft erwiesen, 0,3 bis 1,5 Gew.% Hydrophobierungsmittel, bezogen auf das Gewicht des Gasbetongranulats, zur Hydrophobierung anzuwenden. Diese kann trocken oder feucht mit Nachtrockung erfolgen. Die Hydrophobierung erfolgt in einem für Baustoffe üblicherweise eingesetzten Mischer. Das Gasbetongranulat hat vorzugsweise eine freie Restfeuchte von kleiner als 2%.

Das Gips-Bindemittel wird in Form von abbindefähigen Gipsen, insbesondere als β-Halbhydrat, Anhydrit oder Gemischen dieser Gipsphasen, eingesetzt. Das β-Halbhydrat kann in bekannter Weise durch Brennen von Rauchgasgips zum Halbhydrat gewonnen werden. Das β-Halbhydrat sowie weitere geeignete abbindefähige Gipse können kompaktiert und auf eine geeignete Sieblinie vermahlen werden.

Kalk kann in Form von Calciumhydroxid oder Weißkalk vorliegen, eine bevorzugte Korngröße beträgt etwa 0,1 mm.

Unter Perlite wird erfindungsgemäß Gesteinsschaum verstanden, der durch Wärmebehandlung von vulkanischen Rhyolit- oder Quarzphosphorgläsern gewonnen wird.

Weitere nach einer auf einen hohen Füllgrad ausgerichteten Sieblinie zum hydrophobierten Gasbetongranulat passende Stellmittel umfassen Verzögerer, Tenside, Andicker und Zusatzsoffe zur Verbesserung des Wasserrückhaltevermögens.

Zur Verzögerung des Abbindens eignen sich beispielsweise Fruchtsäuren wie Weinsäure oder Apfelsäure. Zum Beimischen geeignete Tenside sind höhere Fettalkohole, wie Cetyl- und Stearylalkohole, Fettsäureamide, Partialfettsäureester wie Sorbitanfettsäureester, Polyethylenglykolfettsäureester, Polyethylenglykolfettsäureether und Polyethylenglykolsorbitanfettsäureester. Als Andicker sind organische hochmolekulare Stoffe wie Cellulosen, Stärkeether und deren Derivate sowie weitere in Mörtelmischungen übliche Andicker einsetzbar.

### Beispiel 1

Zur Herstellung eines Gipskalkputzmörtels wurde ein Gasbetongranulat mit einer Körnung von bis zu 1,6 mm mit 0,1 % Natriumoleat und 0,5 % Zinkstearat, bezogen auf die Gasbetongranulatmenge, hydrophobiert und ein Gemisch hergestellt aus
- 70 Gew.%: Gips,
- 2 Gew.%: Kalkydrat
- 20 Gew.%: Gasbetongranulat,
- 8 Gew.%: eines Gemischs aus Kalksteinmehl, Kalksteingries und Perlite,
weitere Stellmittel.

Als weitere Stellmittel wurden Verzögerer, Tenside, Andicker und Zusatzstoffe zur Verbesserung des Rückhaltevermögens eingesetzt.

### Beispiel 2

Zur Herstellung eines Gipskalkputzmörtels wurde ein Gasbetongranulat mit einer Körnung von bis zu 1,6 mm mit 0,1 % Natriumoleat und 0,5 % Calciumstearat, bezogen auf die Gasbetongranulatmenge, hydrophobiert und ein Gemisch hergestellt aus
- 40 Gew.%: Gips,
- 10 Gew.%: Kalkhydrat,
- 30 Gew.%: Gasbetongranulat, hydrophobiert
- 20 Gew.%: Kalksteingries in abgestufter Körnung und weitere Stellmittel.

Als weitere Stellmittel wurden Verzögerer, Tenside, Andicker und Zusatzstoffe zur Verbesserung des Rückhaltevermögens eingesetzt.

## Patentansprüche

1. Gips-/Gipskalkputzmörtel als Trockenmörtel, enthaltend
- 2 bis 40 Gew.% hydrophobiertes Gasbetongranulat einer Körnung bis zu 1,6 mm,
- 3 bis 40 Gew.% eines Füllstoffs oder Füllstoffgemischs und
- 40 bis 95 Gew.% der Bindemittel Gips und/oder Kalk.

2. Gips-/Gipskalkputzmörtel nach Anspruch 1, dadurch gekennzeichnet, daß als Füllstoff Perlite, Kalksteinmehl und/oder Kalksteingries eingesetzt werden.

3. Gips-/Gipskalkputzmörtel nach Anspruch 1, dadurch gekennzeichnet, daß weitere nach einer auf einen hohen Füllgrad ausgerichteten Sieblinie zum hydrophobierten Gasbetongranulat passende Stellmittel enthalten sind.

4. Gips-/Gipskalkputzmörtel nach einem der vorangegangenen Ansprüche, dadurch gekennzeichnet, daß das Gasbetongranulat eine freie Restfeuchte von < 2% aufweist.

5. Hydrophobiertes Gasbetongranulat, dadurch gekennzeichnet, daß das Gasbetongranulat mit einem Gemisch eines wasserlöslichen Salzes einer höheren Fettsäure und einer Metallseife einer höheren Fettsäure hydrophobiert ist.

6. Hydrophobiertes Gasbetongranulat nach Anspruch 5, dadurch gekennzeichnet, daß als wasserlösliches Salz einer höheren Fettsäure die Natriumsalze von Fettsäuren mit 14 bis 20 Kohlenstoffatomen, insbesondere Natriumoleat, eingesetzt werden.

7. Hydrophobiertes Gasbetongranulat nach Anspruch 5 oder 6, dadurch gekennzeichnet, daß als Metallseife einer höheren Fettsäure die Calcium- und Zinksalze von Fettsäuren mit 14 bis 20 Kohlenstoffatomen, insbesondere deren Stearate eingesetzt werden.

8. Hydrophobiertes Gasbetongranulat nach Anspruch 5 bis 7, dadurch gekennzeichnet, daß wasserlösliches Salz und Metallseife der höheren Fettsäuren in Massenverhältnissen von 1 zu 4 bis 6 eingesetzt werden.

## Claims

1. Gypsum/gypsum-lime finishing mortar as a dry mortar, containing
- 2 to 40% by weight of hydrophobed gas concrete granulate with a granulation of up to 1.6 mm,
- 3 to 40% by weight of a filler or filler mixture and
- 40 to 95% by weight of the binder gypsum and/or lime.

2. Gypsum/gypsum-lime finishing mortar according to claim 1, characterised in that perlite, limestone powder, and/or limestone grit are used as a filler.

3. Gypsum/gypsum-lime finishing mortar according to claim 1, characterised in that further adjusting means are contained, suitable for hydrophobed gas concrete granulate, according to a grading limit aligned towards a high filling degree.

4. Gypsum/gypsum-lime finishing mortar according to one of the preceding claims, characterised in that the gas concrete granulate has a free residual moisture of < 2%.

5. Hydrophobed gas concrete granulate, characterised in that the gas concrete granulate is hydrophobed with a mixture of a water-soluble salt of a higher fatty acid and a metallic soap of a higher fatty acid.

6. Hydrophobed gas concrete granulate according to claim 5, characterised in that there are used as a water-soluble salt of a higher fatty acid the sodium salts of fatty acids with 14 to 20 carbon atoms, particularly sodium oleate.

7. Hydrophobed gas concrete granulate according to claim 5 or 6, characterised in that there are used as a metal soap of a higher fatty acid the calcium and zinc salts of fatty acids with 14 to 20 carbon atoms, particularly their stearates.

8. Hydrophobed gas concrete granulate according to claim 5 to 7, characterised in that water-soluble salt and metal soap of a higher fatty acid are used in mass ratios of 1 to 4 to 6.

## Revendications

1. Mortier d'enduit de plâtre ou de plâtre et de chaux comme mortier sec, contenant:
- de 2 à 40% en poids de granulé de béton cellulaire hydrophobe d'une granulométrie jusqu'à 1,6 mm,
- de 3 à 40% en poids d'une charge ou d'un mélange de charges, et
- de 40 à 95% en poids d'agents liants à base de plâtre et/ou de chaux.

2. Mortier d'enduit à base de plâtre ou de plâtre et de chaux selon la revendication 1, caractérisé en ce que l'on utilise comme matière de charge de la perlite, de la farine de calcaire et/ou du granule de calcaire.

3. Mortier d'enduit à base de plâtre ou de plâtre et de chaux selon la revendication 1, caractérisé en ce que d'autres agents de réglage appropriés pour rendre hydrophobe le granulé de béton sont présents après une ligne de tamisage conçue pour assurer un degré de remplissage élevé.

4. Mortier d'enduit à base de plâtre ou de plâtre et de chaux selon l'une des revendications précédentes, caractérisé en ce que le granulé de béton cellulaire présente une humidité résiduelle libre < 2%.

5. Granulé de béton cellulaire rendu hydrophobe, caractérisé en ce que le granulé de béton cellulaire est rendu hydrophobe par un mélange de sels solubles dans l'eau d'un acide gras supérieur et d'un savon métallique d'un acide gras supérieur.

6. Granulé de béton cellulaire rendu hydrophobe selon la revendication 5, caractérisé en ce que l'on utilise, comme sels solubles dans l'eau d'un acide gras supérieur, les sels sodiques des acides gras ayant de 14 à 20 atomes de carbone et, en particulier, l'oléate de sodium.

7. Granulé de béton cellulaire rendu hydrophobe selon la revendication 5 ou 6, caractérisé en ce que l'on utilise, comme savons métalliques d'un acide gras supérieur, les sels calcique et zincique des acides gras ayant de 14 à 20 atomes de carbone et, en particulier, les stéarates de ceux-ci.

8. Granulé de béton cellulaire rendu hydrophobe selon les revendications 5 à 7, caractérisé en ce que l'on utilise les sels solubles dans l'eau et les savons métalliques, des acides gras supérieurs, en respectant des rapports massiques compris entre 1 à 4 et 1 à 6.
